# EUROPEAN PATENT SPECIFICATION

(11) **EP 1 126 061 B1**
(45) Date of publication and mention of the grant of the patent: **23.02.2011**
(21) Application number: 00128193.0
(22) Date of filing: 21.12.2000
(51) Int. Cl.: D02J 13/00, F16C 37/00, D06B 23/02, F16C 13/02, D02J 1/22

(54) **Yarn heat treatment roller**
Galette zum Erhitzen eines Fadens
Rouleau pour traitement thermique de fils

(30) Priority: 10.02.2000 JP 2000038141
(43) Date of publication of application: 22.08.2001
(73) Proprietor: MURATA KIKAI KABUSHIKI KAISHA, Minami-ku, Kyoto-shi, Kyoto 601 (JP)
(72) Inventor: Tanigawa, Motohiro, Kisshoin, Minami-ku, Kyoto-shi, Kyoto (JP)
(74) Representative: Liedl, Christine

(56) References cited:
- EP-A- 0 854 216
- WO-A-99/61692
- DE-A- 3 341 862
- DE-A- 19 854 499
- DE-U- 7 113 902
- US-A- 3 576 081
- PATENT ABSTRACTS OF JAPAN vol. 1998, no. 14, 31 December 1998 (1998-12-31) & JP 10 250935 A (MURATA MACH LTD), 22 September 1998 (1998-09-22) -& JP 10 250935 A (MURATA MACH LTD) 22 September 1998 (1998-09-22)
- PATENT ABSTRACTS OF JAPAN vol. 1998, no. 02, 30 January 1998 (1998-01-30) & JP 09 280257 A (ENSHU LTD; SODICK CO LTD), 28 October 1997 (1997-10-28) -& JP 09 280257 A (ENSHU LTD; SODICK CO LTD) 28 October 1997 (1997-10-28)
- PATENT ABSTRACTS OF JAPAN vol. 1999, no. 12, 29 October 1999 (1999-10-29) & JP 11 193826 A (MURATA MACH LTD), 21 July 1999 (1999-07-21) -& JP 11 193826 A (MURATA MACH LTD) 21 July 1999 (1999-07-21)

## Description

### Field of the Invention

The present invention relates to a yarn heat treatment roller for drawing a filament yarn (hereinafter simply referred to as "yarn") that is to be wound up by a take-up winder.

### Background of the Invention

In a conventional yarn melt spinning system, after a plurality of yarns which are to be wound up in the take-up winders are laid between yarn heat treatment rollers, with heaters installed in each of the rollers heating each of the yarns, the yarns are drawn depending on the periphery velocity ratios between each roller. Each yarn heat treatment roller comprises a cylindrical supporting body, a shaft, a roller main body, and a heater. The shaft is supported with bearings inside the supporting body. The roller main body is mounted outside the supporting body and connected to the tip of the shaft. The heater is installed between the supporting body and the roller main body.

When the yarn heat treatment roller begins to heat the yarns, the heat of the heater is transferred from the supporting body to the outer rings of the bearings. In addition, the heat of the heater is also transferred through the roller main body, the junction made up of the roller main body and the shaft, and the shaft to the inner rings of the bearings, resulting in increased temperature of the bearings. The increased temperature of the bearings deteriorates lubricant of the bearings, reduces the life of the bearings, and consequently reduces the durability of the yarn heat treatment roller.

To solve the problem, measures have been proposed, including an apparatus wherein heat pipes are installed outside the outer rings of the bearings, the heat pipes releasing heat by conducting the heat of the bearings to a heat releasing system provided with a multiplicity of fins to suppress the heat buildup of each of the bearings.

However, conventional cooling systems for yarn heat treatment rollers do not sufficiently release heat in some cases, resulting in insufficient cooling of bearings.

It is thus an object of the present invention to provide a yarn heat treatment roller wherein heating-up of bearings is suppressed to improve the durability.

### Summary of the Invention

The present invention is a yarn heat treatment roller as defined in claim 1. The yarn heat treatment roller of the present invention is provided with a shaft supported by bearings inside a supporting body, a roller main body connected to the tip of the shaft outside the supporting body, and a heater positioned between the supporting body and the roller main body. The present invention further includes cooling means to cool the bearings from the inner ring side. The cooling means have the capacity of cooling the bearing from the inner ring side, suppressing the heat-up of the bearings.

Further, the yarn heat treatment roller of the present invention includes the inner ring side cooling means which reduces the amount of heat transferred from the heater through the junction made up of the shaft end and the roller main body up to the shaft.

Thus, the cooling means reduces the amount of the heat transferred from the heater through the shaft to the inner rings of the bearings to suppress the heat-up of the bearings.

The yarn heat treatment roller further comprises a suppression means that constitutes in a dented area formed at the tip of the shaft in order to reduce the contacting area between the roller main body and the shaft end.

Reducing the contacting area between the shaft end and the roller main body reduces the heat conducting area between the shaft end and the roller main body, reducing the amount of heat transferred from the heater through the roller main body to the shaft. This results in reduced heat-up of the bearings. Forming the dented area provides a simple mechanism to reduce the contacting area between the shaft end and the roller main body.

The yarn heat treatment roller still further comprises a cooling means composed of heat pipes that are formed inside the shaft and extend all the way to the tip of the shaft. The heat pipes absorb the heat of the shaft that contacts the inner rings of the bearings, resulting in reduced amount of heat conducted from the shaft to the inner rings of the bearings.

The yarn heat treatment roller of the present invention still further comprises a cooling means composed of through-extending vents that are formed within the shaft. Forming the vents within the shaft reduces the conduction area with the roller main body, thus reduces the heat conducted from the shaft to the inner rings of the bearings.

### Brief Description of the Drawings

Figure 1 is a schematic front view of the melt spinning system of a preferred embodiment of the present invention.
Figure 2 is a schematic side view of the melt spinning system.
Figure 3 is a section view of a yarn heat treatment roller of the present invention.
Figure 4 is a sectional view cut along the IV-IV line in Figure 3.
Figure 5 is an enlarged view of the important part of the first cooling means and the second cooling means in the yarn heat treatment roller.
Figure 6 is an enlarged view of the heat-suppression means of the yarn heat treatment roller as described in Figure 3. Figure 6A is a enlarged and partial view of Figure 2. Figure 6B is a sectional view cut along VIB-VIB line in Figure 6A.

### Detailed Description of the Embodiments

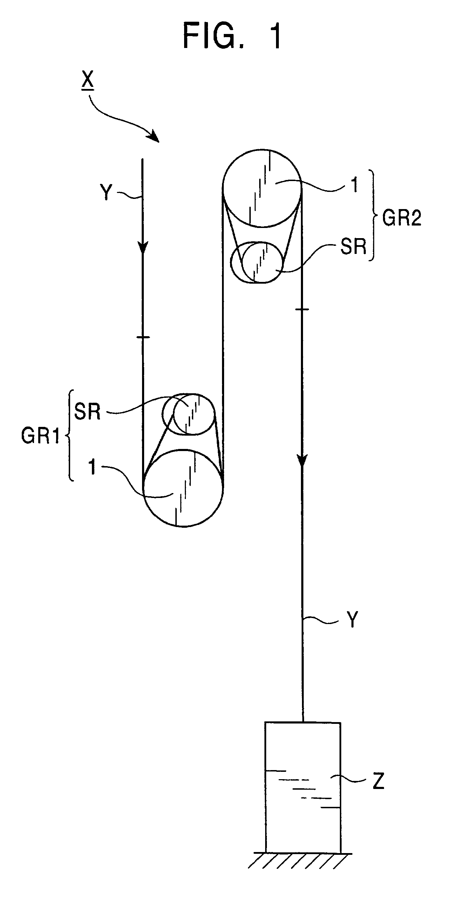

The preferred embodiments of the present invention will now be explained in detail with reference to the accompanying drawings. A yarn heat treatment roller applied to a melt spinning system X of Figure 1 is explained.

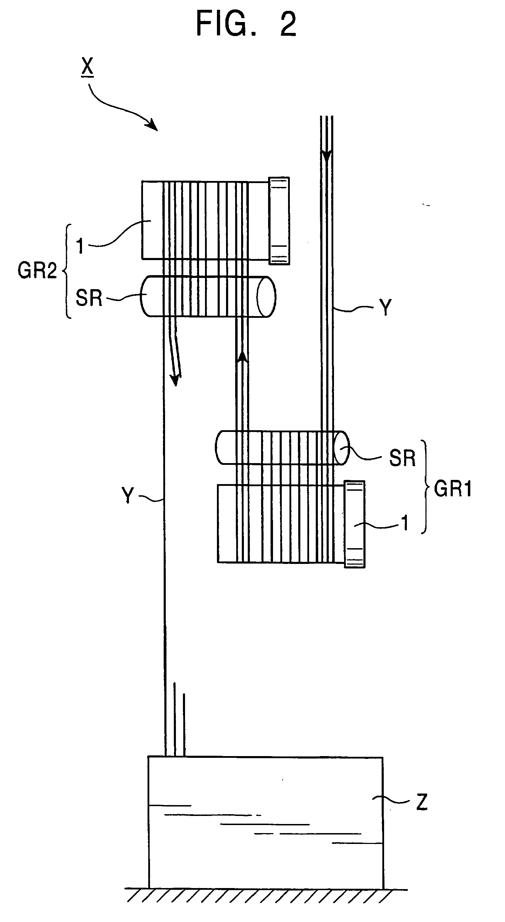

As shown in Figure 1 and Figure 2, a plurality of yarns (filament yarns) Y that has been formed by a melt spinning machine are heated and drawn by a yarn spinning system X and wound up in a take-up winder Z. Each of the yarns is drawn by a first godet roller GR1 and a second godet roller GR2. Each of the godet rollers GR1, GR2 is composed of a yarn heat treatment roller 1 and a separator roller SR. A plurality of yarns Y formed by the melt spinning machine are fed to the first godet roller GR1 and reeled several times between the yarn heat treatment roller 1 and the separator roller SR. After fed out from the first godet roller GR1, each of the yarns Y goes to the second godet roller GR2, reeled several times between the yarn heat treatment roller 1 and the separator roller SR. Then, the plurality of the yarns are spread in the axial direction of the roller, each of the yarns wound up in a separate corresponding package of the take-up winder Z. By making the periphery velocity of the second godet roller GR2 greater than that of the first godet roller GR1, each of the yarns Y is heated and drawn between the godet rollers GR1, GR2.

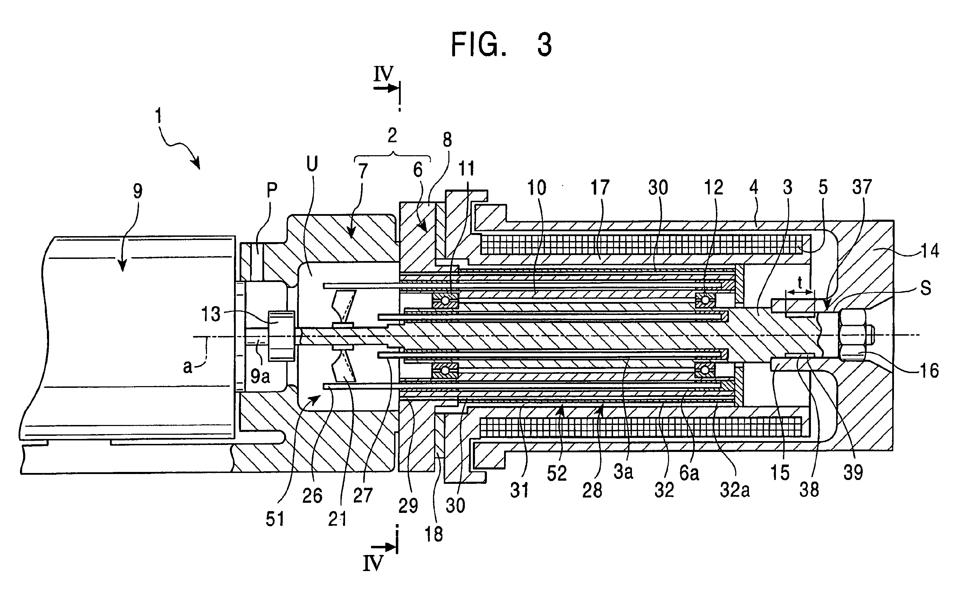

Next, the mechanism of the yarn heat treatment roller 1 is explained in Figure 3 to Figure 6. The yarn heat treatment roller 1 shown in Figure 3 is provided with a supporting body 2, a shaft 3, a roller main body 4, and a heater

### 5. A motor 9 rotates the shaft 3.

The supporting body 2 supports the shaft 3, and is composed of a supporting member 6 and a supporting bracket 7. The supporting member 6 is cylindrical with a flange 8, and is positioned on the same axis of the shaft 3. The supporting member 6 forms a unit together with the supporting bracket 7 with the flange 8 bolted to the supporting bracket 7. The supporting bracket 7 is positioned in the axial direction of the shaft 3 with an air intake passage P formed in the area adjacent to the motor 9. The motor 9 is fixed on the supporting bracket 7. Inside the supporting bracket 7 is formed a cooling space U. The cooling space U is opened to an air intake passage P whereby the supporting body 2 can take in air from the outside of the roller 1 to the cooling space U.

The shaft 3 is inserted into the inside hole 10 of the supporting member 6, and rotatably supported by a pair of bearings 11,12 to the supporting member 6 so that the shaft 3 can rotate freely. Each of the bearings 11,12 is installed at each end of the supporting member 6 in the axial direction of the shaft 3. The shaft 3 goes through the supporting member 6, sticking out at the opposite side of the motor 9 from the supporting member 6. The shaft 3 becomes diametrically smaller at the motor 9 side, and goes through the cooling space U and is connected to the driving shaft 9a of the motor 9 with the use of the coupling 13. The shaft 3 is driven by the motor 9 and rotates against the supporting member 6.

The roller main body 4 is positioned outside the supporing member 6 with some clearance. The cylindrical body of the roller main body 4 is closed at the tip by a side wall 14, the roller main body 4 formed in the shape of a cup. The side wall 14 of the roller main body 4 has a boss 15 formed as a part thereof, the boss 15 projecting into the cylindrical body. The roller main body 4 is set so that the open side of the roller main body 4 goes toward the flange 8 outside the supporting member 6, and is connected to the one end of the shaft 3 with the boss 15 pressed onto the one end of the shaft 3. The roller main body 4 is secured with a nut 16 screwed tight to the one end of the shaft 3 , so that the roller main body 4 is cantilever extending from the one end of the shaft 3 to the vicinity of the flange 8 and rotates together with the shaft 3. A junction 37 is formed by the boss 15 of the roller main body 4 and the shaft 3.

A heater 5 is positioned between the supporting member 6 and the roller main body 4 and is mounted on the supporting member 6 by means of a heater supporting member 17, and the heater 5 is against the inside of the roller main body 4. The heater supporting member 17 is positioned with a clearance next to the cylindrical part of the supporting member 6 and pressed against the flange 8 of the supporting member 6 with a spacer 18 in between, so that the heater 5 heats the cylindrical body of the roller main body 4.

The yarn heat treatment roller 1 is provided with a cooling system and a heat conduction suppression system to suppress the temperature of each of the bearings 11,12.

A cooling system of the yarn heat treatment roller 1 is composed of a cooling fan 21 to blow cooling air for each of the bearings 11,12, and a first cooling means 51 and a second cooling means 52 to utilize the air blown from the cooling fan 21 to cool each of the bearings 11,12.

The cooling fan 21 is positioned inside the cooling space U of the supporting bracket 7, capable of sending air from the air intake passage P to the supporting member 6, and mounted on the shaft 3. The cooling fan 21 is rotated in junction with the shaft 3, taking in air from the outside of the roller through the air intake P into the inside of the cooling space U, and generates air currents in the cooling space U.

The first cooling means 51 is composed of a first heat pipe 26 and a second heat pipe 27. The first heat pipe 26 and the second heat pipe 27 are filled with heat transferring medium such as water vapor, and transfer the heat of each of the bearings 11,12 to the area lower in temperature.

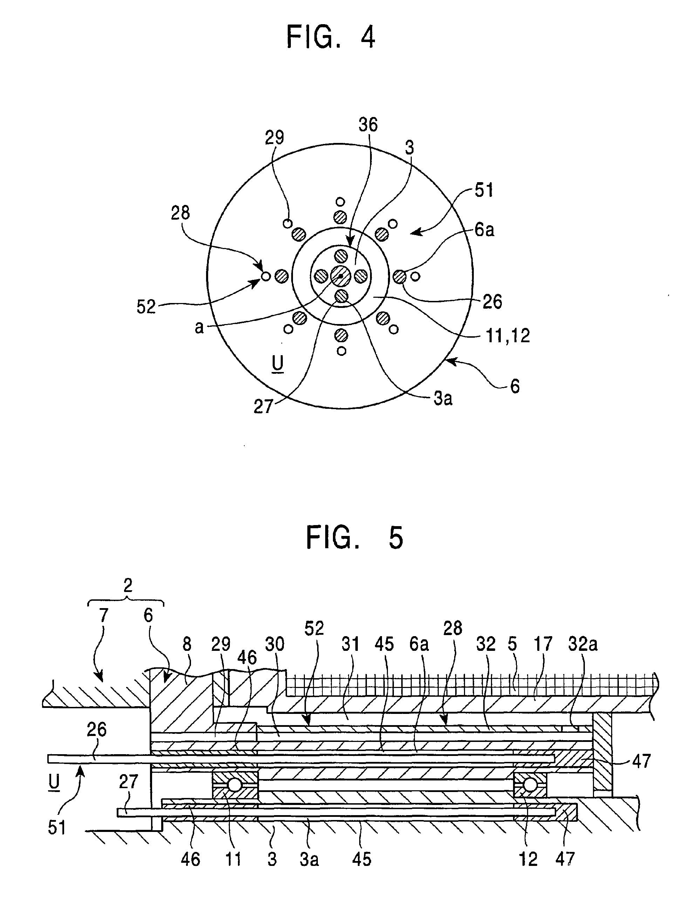

There are a plurality of the heat pipes 26. Each of the heat pipes 26 is inserted into each of the insertion holes 6a of the supporting member 6. Each of the first heat pipes 26 is positioned outside the outer ring of the bearings 11,12, in the vicinity thereof, extends from the cooling space U in the axial direction of the shaft 3, and passes the bearing 11 to reach the vicinity of the bearing 12. The first heat pipes 26 are circularly positioned in the supporting member 6 around the circumference thereof at an interval from each other (Refer to Figure4). Each of the first heat pipes 26 projects into the cooling space U and the first heat pipes 26 are positioned around the cooling fan 21. The first heat pipes 26 are positioned outside each of the bearings 11,12 and therefore, conducts heat from the outer ring of each of the bearings 11,12 to the vicinity of the cooling fan 21 of the cooling space U. In other words, the first heat pipes 26 are used as a cooling means for the outer ring side of each bearing 11,12.

There are several of the second heat pipes 27, and each of the second heat pipes 27 is inserted in each of the insertion holes 3a of the shaft 3, and rotates in conjunction with the shaft 3. Each of the second heat pipes 27 is positioned inside each of the bearings 11,12 in the vicinity thereof, extending from the cooling space U in the axial direction of the shaft 3, passing the bearing 11, and reaching the bearing 12. The second heat pipes 27 are circularly positioned in the shaft 3 at an interval from each other (Refer to Figure 4). Each of the second heat pipes 27 projects into the cooling space U and a projected end of each second heat pipe 27 is facing the cooling fan 21. The heat pipes 27 transfer the heat of the bearings 11,12 from inside of each of the bearing 11,12 to the cooling space U. The second heat pipes 27 constitute a cooling means for the inner ring side of the bearings 11,12.

The first heat pipe 26 and the second heat pipe 27 are inserted in a way shown in Figure 5. As in Figure 5, each of the heat pipes 26,27 is inserted into an insertion holes 3a, 6a with a heat-insulating clearance 45. Further, each of the heat pipes 26,27 is secured to the supporting member 6 and the shaft 3 respectively by means of a pipe member 46 which is inserted into each of the insertion holes 3a, 6a. An area near the bearing 12 of the clearance 45 is filled with a heat conductive medium 47, which covers each of the heat pipes 26,27. Each of the heat pipes 26,27 is heat-insulated from the supporting member 6 and the shaft 3 by means of the clearance 45, and at the same time can transfer the heat of the bearing 11,12 from outside of the outer ring and inside of the inner ring respectively by means of the heat-conducting medium 47, which effectively conducts heat, all the way to the cooling fan 21 of the cooling space U. The insertion structure shown in Figure 5 can sufficiently cool the bearing 12 even though the bearing 12 is directly affected by the heat of the heater 5 because the bearing 12 is positioned inside the heater 5 and the heater supporting member 17. Furthermore, the second heat pipes 27 are positioned off the axis of the shaft 3 so that the projected parts of the second heat pipes 27 in the cooling space U rotate around the axis of the shaft 3 when the shaft 3 rotates, resulting in efficient cooling.

A second cooling means 52 is composed of an air passage 28, and is aimed at cooling the bearings 11,12 by introducing the air of the cooling fan 21 to the outside of the outer rings of the bearings 11,12. The air passage 28 is composed of a plurality of vents 29 and a first air passage 30 and a second air passage 31. Each of the vents 29 is formed in the supporting member 6, extending outside of the first heat pipes 26 in the vicinity thereof, and make a passage from the air cooling space U to a space between the supporting member 6 and the heater supporting member 17. The vents 29 are circularly positioned at an interval between one another along the circumference of the supporting member 6 (refer to Figure 4). The first air passage 30 and second air passage 31 form a double-ring-shaped space between the supporting member 6 and the heater supporting member 17 by means of a cylindrical guide body 32, extending from end to end of the shaft 3. The first air passage 30 is linked with the cooling space U through the vents 29, extending outside of the supporting member 6, passing by the outside of the outer ring of the bearing 11, and reaching the outside of the outer ring of the bearing 12. The second air passage 31 is linked with the first air passage 30 at a point near the bearing 12 with a connecting hole 32a, extends inside the heater supporting member 17, going back to the flange 8 of the supporting member 6 on the other side of the shaft 3. Further, the second air passage 31 is linked with the outside of the roller through a clearance formed between the supporting member 6, the heater supporting member 17 and the spacer 18. Therefore, the air passage 28 sends the air from the cooling fan 21 through the vents 29 to the first air passage 30 and further to the outside of the outer rings of the bearings 11,12. The air is further passed through the first air passage 30 to the second air passage 31 and is vented outside of the roller. In other words, outside air is passed through the roller. The second cooling means 52 is a means for an outer ring side cooling means for the bearings 11,12.

A heat conduction suppression system suppresses the heat conducted to the inner rings of the bearings 11,12 from the heater 5 through the side wall 14 of the roller main body 4, the boss 15, and the shaft 3, and is composed of a suppression means 35.

The suppression means 35 suppresses the amount of heat conducted from the heater 5, the side wall of the roller main body 4, and the boss 15 to the shaft 3 by reducing a conduction area S, which is an area where the roller main body 4 touches the shaft 3, at the junction 37. To reduce the conduction area S, a ring-like indented groove 38 is formed, wehrein the boss 15 of the roller main body 4 does not touch the shaft 3. The ring-like groove 38 is formed to extend a certain distance (t) in the axial direction on the outer surface of the shaft 3. The suppression means 35 reduces the amount of heat conducted to the inner rings of the bearings 11,12 by suppressing the heat conduction from the heater 5 and the roller main body 4 to the shaft 3 as a result of the reduced conduction area S. In addition, the ring-like groove 38 creates a clearance 39. The clearance 39 insulates heat and suppresses the conduction of heat to the shaft 3. The length (t) of the ring-like groove 38 can be adjusted according to the junction conditions of the boss 15 and the shaft 3. In another example, the ring-like groove 38 can be formed on the surface of the inner circumference of the boss 15. The suppression means 35 is a means for an inner ring side cooling means for the bearings 11,12 by reducing the amount of the heat conducted to the inner ring side of the bearings 11,12.

Next, Figure 3, Figure 5 and Figure 6 illustrate the operation of the yarn heat treatment roller 1.

As is shown in Figure 3, the motor 9 rotates the shaft 3 and the roller main body 4, and at the same time the heater 5 heats up the roller main body 4.

In this way, the yarn heat treatment roller 1 reels several times and then heats up the several yarns Y that has been formed by a melt spinning machine.

When the yarns Y begin to be heated, the heat of the heater 5 is conducted from the heater supporting member 17 and the supporting member 6 to the outer rings of the bearings 11,12. In addition, the heat of the heater 5 is conducted through the side wall 14 of the roller main body 4, the boss 15 and the shaft 3 to the inner rings of the bearings 11,12, and heats up the bearings 11,12.

However, the heat pipes 26,27 of the first cooling means 51 absorb the heat from the outside of the outer rings and the inside of the inner rings of the bearings 11,12, which will be transferred to the cooling space U and released. The cooling fan 21 is rotated and generates air currents at the same time when the shaft 3 rotates. The air generated in the cooling space U takes away the heat from and thus cools the heat pipes 26,27 of the first cooling means 51, so that the air indirectly cools the bearings 11,12 (Refer to Figure 3). In addition, the second heat pipes 27 cool down while rotating in conjunction with the shaft 3.

Still further, the air from the cooling fan 21 is introduced into the air passage 28 of the second cooling means 52, and cools the bearings 11,12 while the air runs through the first air passage 30 by taking away the heat from the outer rings of the bearings 11,12. The air, having absorbed the heat from the bearings 11,12, goes from the first air passage 30 to the second air passage 31. It cools the heater supporting member 17 while it runs through the second air passage 31, and thus suppresses the heat conduction to the supporting member 6 and eventually to the bearings 11,12.

Thus, even though the heater 5 heats the roller main body 4, the heat-up of the bearings 11,12 is effectively suppressed by the air of the cooling fan 21 used for the heat pipes 26,27 of the first cooling means 51, and for the air passage 28 of the second cooling means 52. As a result, the heat-up of the outside of the outer ring and the inside of the inner rings of the bearings 11,12 is effectively suppressed.

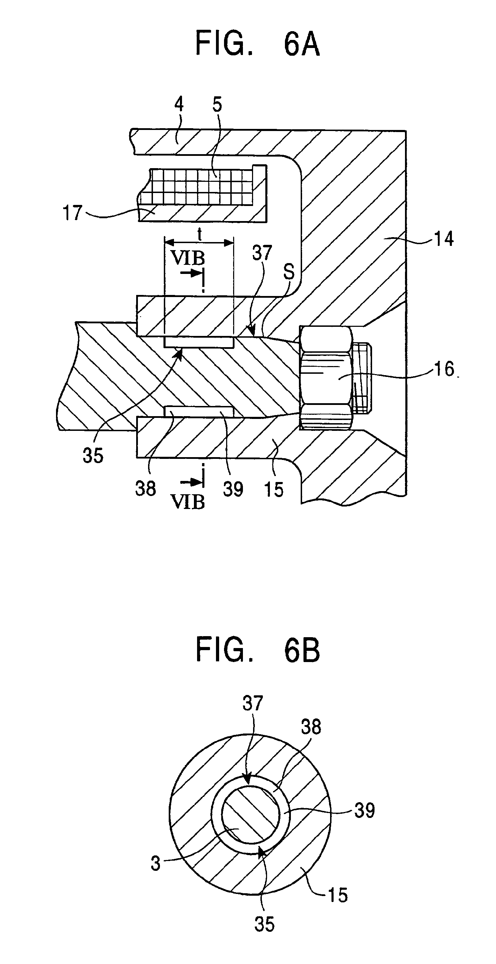

Still further, the amount of heat conducted from the side wall 14 of the roller main body 4, the boss 15 and the shaft 3 to the bearings 11,12 is suppressed by reducing the conduction area S by means of the suppression means 35 (refer to the Figure6). In this way, the heat-up from the inner ring side of the bearings 11,12 can be suppressed.

The yarn heat treatment roller 1 of the present invention effectively suppresses the heat built-up of the bearings 11,12, thus prevents the deterioration of lubricant of the bearings 11,12, and improve the life thereof, with the first and second cooling means 51,52 cooling the bearings 11,12, and the suppression means 35 suppressing the heat conducted to the inner rings of the bearings 11,12.

In addition, by installing the cooling fan on the shaft 3, it has become possible to cool the bearings 11,12 without connecting a separate air source to the cooling space U.

Still further, the air generated in the cooling space U is blown directly to the bearing 11, and then goes on passing by the bearings 11,12, and finally is released outside through the clearings of the shaft 3 and the supporting member 6. As stated above, the air is also released through the air passage 28.

As a result, the heat taken away from the heat pipes 26,27 is not contained inside the cooling space U. The air introduced from the outside allows effective cooling of the heat pipes 26,27.

At least one of the cooling structure and the heat conduction suppression structure may be employed in the yarn heat treatment roller 1 of the present invention.

At least one of the first cooling means 51 and the second cooling means 52 may be employed as the cooling structure. If only the second cooling pipes 27 are employed, there is no need to install the cooling fan 21 for the cooling of the bearings 11,12 and for the suppression of the heat conducted to the bearings 11,12. That is because each of the heat pipes 27 is positioned off the center of the rotation axis as shown in Figure 4 so that the heat pipes 27 generate air currents while rotating inside the cooling space U as the shaft 3 rotates. As a result, the air generated by the rotation of the shaft 3 can effectively cool down each of the heat pipes 27.

Another mechanism that is employable is that a plurality of vents formed inside the shaft 3 to reduce the heat conduction area S between the shaft 3 and the roller main body 4. The vents are opened to the cooling space U and extend to the other end of the shaft, or to the boss 15 of the roller main body. 4.

The yarn heat treatment roller 1 is not only usable for the melt spinning system X. In addition, the number and the configuration of each of the heat pipes 26,27 and the air vents 29 are not limited to the example shown in Figure 4.

The yarn heat treatment roller of the present invention employs a cooling means to cool the inner ring side of the bearings, enabling the cooling of the bearings from the inner ring side, resulting in effective suppression of the heat-up of the bearings. Consequently, the lubricant of the bearings is prevented from deteriorating, the life of the bearings is prolonged, and the durability of the yarn heat treatment roller is improved.

The yarn heat treatment roller of the present invention has a suppression means to suppress the heat conducted from the heater through the roller main body to the shaft, so that the heat-up of the bearings resulting from the heat conducted to the inner rings of the bearings is suppressed even though the heater heats the roller main body.

In the yarn heat treatment roller of the present invention, by reducing the contacting area between the one end of the shaft and the roller main body, the heat conduction area between the one end of the shaft and the roller main body is reduced, thus resulting in reduced amount of heat conducted from the heater through the roller main body to the shaft to reduce the heat-up of the bearings.

In the yarn heat treatment roller of the present invention, by absorbing the heat of the shaft contacting the inner ring side of the bearings with the use of the heat pipes, the amount of heat conducted from the shaft to the inner rings of the bearings is suppressed.

In the yarn heat treatment roller of the present invention, by forming the vents inside the shaft, the heat conduction area between the shaft and the roller main body is reduced, thus leading to the suppression of the amount of heat conducted from the shaft to the inner rings of the bearings.

In the yarn heat treatment roller of the present invention, by installing the outer ring side cooling means for the bearings, the bearings can be cooled from both the inner and outer ring sides, leading to the effective cooling of the bearings.

## Claims

1. Yarn heat treatment roller having a shaft (3) supported by bearings (11, 12) and positioned within a supporting body (2), a roller main body (4) positioned outside the supporting body and connected to one end of the shaft, a heater (5) installed between the supporting body and the roller main body, and a cooling system comprising a cooling fan (21) and cooling means (51, 52) to utilize the air blown from the cooling fan (21) to cool each of the bearings (11, 12),
**characterized in that**
the cooling means (51, 52) comprises first pipes (26) and second pipes (27), both filled with a heat transferring medium,
wherein the first pipes (26) are positioned outside the outer ring of the bearings (11, 12) circularly in the supporting body (2), and
the second heat pipes (27) are positioned inside the inner ring of the bearings (11, 12) circularly in the shaft (3),
the cooling fan (21) is positioned inside a cooling space (U), and
the first and second pipes (26, 27) project into the cooling space (U).

2. Yarn heat treatment roller according to claim 1,
**characterized in that**
the first and second pipes (26, 27) are inserted into insertion holes (3a, 6a) in the supporting body (2), heat-insulated from the supporting member and the shaft (3) by means of a clearance (45).

3. Yarn heat treatment roller according to claim 1 or 2,
**characterized in that**
the area near one (12) of the bearings (11, 12) is filled with a heat-conducting medium (45).

4. Yarn heat treatment roller according to one of the claims 1 to 3,
**characterized in that**
the first and second pipes (26, 27) are secured to the supporting body (2) and the shaft (3), respectively, by means of a pipe member (46).

5. Yarn heat treatment roller according to one of the claims 1 to 4,
**characterized in that**
the second pipes (27) are positioned off the axis of the shaft (3) so that the projected parts of the second heat pipe (27) in the cooling space (U) are rotatable around the axis of the shaft (3).

6. Yarn heat treatment roller according to one of the claims 1 to 5,
**characterized in**
**that** the cooling means (51, 52) comprises an air passage (28) composed of vents (29) in the supporting body (2) opening into the cooling space (U) and a first air passage (30) and a second air passage (31) forming a double-ring-shaped space between the supporting body (2) and the heater (5), and
**that** the first air passage (30) is in communication with the cooling space (U) and the second air passage (31) is in communication with the first air passage (30) and the outside of the roller.

7. A yarn heat treatment roller according to one of the claims 1 to 6,
**characterized by**
a suppression means (35) suppressing the heat conducted from the heater (5), and the roller main body (4) to the shaft (3) by a ring-like indented groove (38).

## Patentansprüche

1. Galette zum Erhitzen eines Fadens, mit einer Welle (3), die über Lager (11, 12) gelagert und in einem Lagerkörper (2) angeordnet ist, einem Rollenhauptkörper (4), der außerhalb des Lagerkörpers angeordnet ist und mit einem Ende der Welle verbunden ist, einer Heizvorrichtung (5), die zwischen dem Lagerkörper und dem Rollenhauptkörper montiert ist, und einem Kühlsystem aufweisend einen Kühlventilator (21) und eine Kühleinrichtung (51, 52) zur Nutzung der von dem Kühlventilator abgeblasenen Luft, um jedes der Lager (11, 12) zu kühlen,
**dadurch gekennzeichnet, dass**
- die Kühleinrichtung (51, 52) erste Rohre (26) und zweite Rohre (27) aufweist, die beide mit einem Wärmeübertragungsmedium gefüllt sind,
- wobei die ersten Rohre (26) außerhalb des äußeren Rings der Lager (11, 12) kreisförmig in dem Lagerkörper (2) angeordnet sind,
- die zweiten Hitzerohre (27) innerhalb des inneren Rings der Lager (11, 12) kreisförmig in der Welle (3) angeordnet sind,
- der Kühlventilator (21) innerhalb des Kühlraumes (U) angeordnet ist, und
- die ersten und zweiten Rohre (26, 27) in den Kühlraum (U) vorstehen.

2. Galette zum Erhitzen eines Fadens nach Anspruch 1,
**dadurch gekennzeichnet, dass**
die ersten und zweiten Rohre (26, 27) in Einsetzöffnungen (3a, 6a) in dem Lagerkörper (2), von dem Lagerelement und der Welle (3) mittels eines Spiels (45) wärmeisoliert, eingesetzt sind.

3. Galette zum Erhitzen eines Fadens nach Anspruch 1 oder 2,
**dadurch gekennzeichnet, dass**
der Bereich nahe einem (12) der Lager (11, 12) mit einem wärmeleitenden Medium (45) gefüllt ist.

4. Galette zum Erhitzen eines Fadens nach einem der Ansprüche 1 bis 3,
**dadurch gekennzeichnet, dass**
die ersten und zweiten Rohre (26, 27) an dem Lagerkörper (2) und der Welle (3) jeweils durch ein Rohrelement (46) befestigt sind.

5. Galette zum Erhitzen eines Fadens nach einem der Ansprüche 1 bis 4,
**dadurch gekennzeichnet, dass**
die zweiten Rohre (27) derart entfernt von der Achse der Welle (3) angeordnet sind, dass die vorstehenden Abschnitte des zweiten Wärmerohres (27) in dem Kühlraum (U) um die Achse der Welle (3) drehbar sind.

6. Galette zum Erhitzen eines Fadens nach einem der Ansprüche 1 bis 5,
**dadurch gekennzeichnet, dass**
die Kühleinrichtung (51, 52) einen Luftkanal (28), der aus Luftdurchlässen (29) in dem Lagerkörper (2), die sich in den Kühlraum (U) öffnen, besteht, und einen ersten Luftkanal (30) und einen zweiten Luftkanal (31), die einen doppelringförmigen Raum zwischen dem Lagerkörper (2) und der Heizvorrichtung (5) bildet, aufweist, und
der erste Luftkanal (30) mit dem Kühlraum (U) in Verbindung steht und der zweite Luftkanal (31) mit dem ersten Luftkanal (30) und der Außenseite der Rolle in Verbindung steht.

7. Galette zum Erhitzen eines Fadens nach einem der Ansprüche 1 bis 6,
**gekennzeichnet durch**
eine Dämmeinrichtung (35), die die von der Heizvorrichtung (5) und von dem Rollenhauptkörper (4) an die Welle (3) abgeführte Wärme **durch** eine ringförmig vertiefte Nut (38) dämmt.

## Revendications

1. Rouleau de traitement thermique de fil ayant un arbre (3) supporté par des roulements (11, 12) et positionné à l'intérieur d'un corps support (2), un corps principal (4) de rouleau positionné à l'extérieur du corps support et raccordé à une extrémité de l'arbre, un élément chauffant (5) installé entre le corps support et le corps principal de rouleau, et un système de refroidissement comprenant un ventilateur de refroidissement (21) et des moyens de refroidissement (51, 52) pour utiliser l'air soufflé à partir du ventilateur de refroidissement (21) pour refroidir chacun des roulements (11, 12),
**caractérisé en ce que**
les moyens de refroidissement (51, 52) comprennent des premiers tubes (26) et des deuxièmes tubes (27), tous remplis d'un agent de transfert de chaleur,
dans lequel les premiers tubes (26) sont positionnés à l'extérieur de la bague extérieure des roulements (11, 12) de façon circulaire dans le corps support (2), et les deuxièmes tubes (27) de chaleur sont positionnés à l'intérieur de la bague intérieure des roulements (11, 12) de façon circulaire dans l'arbre (3),
le ventilateur de refroidissement (21) est positionné à l'intérieur d'un espace de refroidissement (U), et
les premiers et deuxièmes tubes (26, 27) font saillie dans l'espace de refroidissement (U).

2. Rouleau de traitement thermique de fil selon la revendication 1,
**caractérisé en ce que**
les premiers et deuxièmes tubes (26, 27) sont insérés dans des trous d'insertion (3a, 6a) dans le corps support (2), isolés thermiquement de l'élément support et de l'arbre (3) au moyen d'un espace vide (45).

3. Rouleau de traitement thermique de fil selon la revendication 1 ou la revendication 2,
**caractérisé en ce que**
la zone proche de l'un (12) des roulements (11, 12) est remplie d'un agent thermiquement conducteur (45).

4. Rouleau de traitement thermique de fil selon l'une des revendications 1 à 3,
**caractérisé en ce que**
les premiers et deuxièmes tubes (26, 27) sont fixés au corps support (2) et à l'arbre (3) respectivement, au moyen d'un élément de tube (46).

5. Rouleau de traitement thermique de fil selon l'une des revendications 1 à 4,
**caractérisé en ce que**
les deuxièmes tubes (27) sont positionnés à l'écart de l'axe de l'arbre (3) de sorte que les parties en saillie du deuxième tube (27) de chaleur dans l'espace de refroidissement (U) peuvent tourner autour de l'axe de l'arbre (3).

6. Rouleau de traitement thermique de fil selon l'une des revendications 1 à 5,
**caractérisé en ce que**
les moyens de refroidissement (51, 52) comprennent un passage d'air (28) composé d'évents (29) dans le corps support (2) s'ouvrant dans l'espace de refroidissement (U) et un premier passage d'air (30) et un deuxième passage d'air (31) formant un espace en forme de double anneau entre le corps support (2) et l'élément chauffant (5), et
**en ce que** le premier passage d'air (30) est en communication avec l'espace de refroidissement (U), et le deuxième passage d'air (31) est en communication avec le premier passage d'air (30) et l'extérieur du rouleau.

7. Rouleau de traitement thermique de fil selon l'une des revendications 1 à 6,
**caractérisé par**
des moyens de suppression (35) supprimant la chaleur conduite depuis l'élément chauffant (5) et le corps principal (4) de rouleau vers l'arbre (3) par une rainure (38) dentelée à la façon d'une bague.
